(19) Europäisches Patentamt
European Patent Office
Office européen des brevets

(11) **EP 0 802 430 B1**

(12) **EUROPÄISCHE PATENTSCHRIFT**

(45) Veröffentlichungstag und Bekanntmachung des Hinweises auf die Patenterteilung:
**26.03.2003 Patentblatt 2003/13**

(51) Int Cl.⁷: **G01V 8/20**, G01N 21/33, G01N 21/88

(21) Anmeldenummer: **97106107.2**

(22) Anmeldetag: **14.04.1997**

(54) **Opto-elektronischer Sensor**

Opto-electronic sensor

Capteur opto-électronique

(84) Benannte Vertragsstaaten:
**CH DE DK FR IT LI**

(30) Priorität: **18.04.1996 DE 29607076 U**

(43) Veröffentlichungstag der Anmeldung:
**22.10.1997 Patentblatt 1997/43**

(73) Patentinhaber: **Sick AG**
**79183 Waldkirch, Breisgau (DE)**

(72) Erfinder:
• **Alt, Gerhalt**
**79350 Sexau (DE)**
• **Franz, Thomas**
**79211 Denzlingen (DE)**

• **Hirt, Günter**
**77790 Steinach (DE)**
• **Kietz, Daniel**
**79359 Riegel (DE)**

(74) Vertreter:
**Finsterwald, Manfred, Dipl.-Ing.,**
**Dipl.-Wirtsch.-Ing. et al**
**Manitz, Finsterwald & Partner GbR**
**Martin-Greif-Strasse 1**
**80336 München (DE)**

(56) Entgegenhaltungen:
EP-A- 0 176 826       EP-A- 0 493 239
DE-C- 4 343 457       GB-A- 1 376 304
GB-A- 2 178 841       US-A- 5 498 872
US-A- 5 663 791

**Beschreibung**

Die Erfindung betrifft einen opto-elektronischen Sensor zur Erkennung von transparenten Gegenständen, beispielsweise von Glaskörpern, Kunststoffkörpern oder Folien, mit zumindest einem Sender zum Aussenden von Lichtsignalen in einen Überwachungsbereich, mit zumindest einem Empfänger zum Empfangen der ausgesandten Lichtsignale, sowie mit zumindest einer Auswerteeinheit zur Auswertung der Empfangssignale, gemäß dem Oberbegriff des Anspruchs 1.

Die Erkennung transparenter Gegenstände in der Industrie (Folienherstellung, Verpackungsanlagen, Flaschenherstellung, Abfüllanlagen, etc.) ist eine technisch anspruchsvolle Aufgabe, welche durch die eingangs genannten Sensoren nicht immer zufriedenstellend lösbar ist.

Zur Lösung der genannten Aufgabe existieren gemäß Stand der Technik unterschiedliche Lösungsansätze:

- Falls der Trübungsgrad des zu detektierenden Materials hoch genug ist, werden herkömmliche Lichtschranken mit einer angepaßten Empfindlichkeit eingesetzt.

- Weiterhin können die Polarisations- bzw. Depolarisationseigenschaften der zu detektierenden transparenten Gegenstände für deren Erkennung ausgenutzt werden, indem versucht wird, die aufgrund der genannten Eigenschaften stattfindende Signalveränderung auszuwerten.

- Die vom Sensor gelieferten Signale können daraufhin untersucht werden, ob ein starker Oberflächenreflex sowie gleichzeitig eine hinreichende Dämpfung erkennbar ist, woraus auf das Vorhandensein eines transparenten Objektes geschlossen werden kann.

- Schließlich sind Sensoren bekannt, die mit UV-Brennern arbeiten und die von den transparenten Objekten hervorgerufene Transmissionsänderungen im UV-Bereich detektieren können.

Bei Realisierung der vorstehend genannten bekannten Prinzipien muß aufgrund der geringen Dämpfung der zu erkennenden Materialien mit sehr hohen Systemempfindlichkeiten gearbeitet werden, um auch Materialien mit hoher Transmission sicher erkennen zu können. Dies führt zwangsläufig dazu, daß die Zuverlässigkeit derartiger Systeme durch Fehlschaltungen, beispielsweise aufgrund von Oberflächenreflexen oder optischer Störstrahlung beeinträchtigt wird.

Da die zu erkennenden transparenten Gegenstände oftmals die Auswertung erschwerende Depolarisationseigenschaften aufweisen, kann die vorstehend genannte Auswertung der Polarisationseigenschaften nicht immer zu dem gewünschten Ergebnis der zuverlässigen Erkennung transparenter Gegenstände führen. Zusätzlich erschwert wird die Auswertung dadurch, daß die transparenten Gegenstände neben starken Oberflächenreflexen, die beispielsweise durch glatte Oberflächen hervorgerufen werden, und einer geringen optischen Dämpfung unter Umständen auch noch refraktive Effekte (z.B. Linsenwirkung bei gefüllten Flaschen) aufweisen, so daß der optische Strahlenfluß durch den transparenten Gegenstand nicht in gewünschter Weise gedämpft, sondern sogar erhöht wird.

Ein Grundproblem der bekannten Sensoren besteht folglich darin, daß sie oftmals nur ganz bestimmte zu detektierende Gegenstände sicher erkennen können.

Die vorstehend ebenfalls erwähnten Sensoren, die mit UV-Lampen arbeiten, machen sich die starken Transmissionsänderungen der zu detektierenden Gegenstände im nahen UV-Spektrum zunutze. Diese Sensoren zeigen jedoch bedingt durch die verwendeten UV- bzw. Quarzlampen eine geringe Lebensdauer, was einen erhöhten Wartungsaufwand bedingt. Die Verwendung der genannten Lampen entspricht zudem wegen der erforderlichen Baugröße nicht dem erwarteten Standard moderner Industriesensoren.

Ein weiteres wesentliches Problem bekannter Sensoren besteht darin, daß die erhaltenen Meßsignale durch Störeinflüsse verfälscht werden. Störungen werden dabei beispielsweise hervorgerufen durch Alterung bzw. Degradation der verwendeten Bauteile, insbesondere des Senders, durch Triften, durch Verschmutzung, durch Oberflächenreflexion, durch von den zu erkennenden Gegenständen hervorgerufene Linsen- und Spiegeleffekte, sowie durch Temperatureinflüsse, insbesondere durch den Temperaturgang der Leistung des zum Einsatz kommenden Senders.

Die DE 43 43 457 C1 beschreibt eine optoelektronische Vorrichtung mit einem Sender, einem Empfänger und einer Auswerteeinheit, mit der transparente, das Sendelicht schwach absorbierende Gegenstände weitgehend unabhängig von ihrer Materialbeschaffenheit sicher erkannt werden sollen. Hierfür ist zur Erhöhung der Nachweisempfindlichkeit vorgesehen, daß polarisierende Mittel im Strahlengang der optoelektronischen Vorrichtung angeordnet sind, welche die Polarisationsrichtung des Sendelichts beim Durchgang durch die Gegenstände drehen. Da auch vor dem Empfänger polarisierende Mittel angeordnet sind, erfährt der Sendelichtstrahl aufgrund der durch den Gegenstand verursachten Drehung der Polarisationsebene eine für die Detektion ausreichende Schwächung. Für die Einstellung der polarisierenden Mittel werden Referenzmessungen miteinander verglichen, für die bei jeweils gleicher Einstellung der polarisierenden Mittel der Sendelichtstrahl auf unterschiedliche Bereiche eines transparenten Gegenstands gerichtet war. Bei homogenen transparenten Gegenständen ist für die erste Referenzmessung der Sendelichtstrahl auf den Gegenstand gerichtet, und die zweite, hiermit zu vergleichende Referenzmessung erfolgt bei freiem Strahlengang. Als Ergebnis des Vergleichs der Referenzmessungen miteinander wird die Arbeitspunkteinstellung für den nachfolgenden Detektionsbetrieb der Vorrichtung ermittelt.

Aus der US 5,498,872 A ist eine Gasanalysevorrichtung bekannt, mit der die Konzentrationen unterschiedlicher Abgase von vorbeifahrenden Kraftfahrzeugen bestimmt werden sollen. Die Vorrichtung besitzt einen Infrarot- und UV-Sender, sowie eine Detektoreinheit, mit der die durch die Fahrzeug-Abgase gesendete Infrarot- und UV-Strahlung gemessen wird. Ein Computer berechnet die Konzentrationen der verschiedenen Abgase. Für jede zu bestimmende Abgaskonzentration ist eine bestimmte Wellenlänge der Infrarot- bzw. UV-Sendestrahlung vorgesehen. Für einen einzelnen Meßkanal, also für ein bestimmtes Abgas bzw. eine bestimmte Sendewellenlänge, kann anhand eines Referenzkanals eine Normierung durchgeführt werden, und durch Einführen einer das betreffende Abgas enthaltenden Kalibrierungszelle in den Strahlengang kann ein Kalibrierungsfaktor für das betreffende Abgas bestimmt werden. Die Detektion transparenter Gegenstände ist in dieser Schrift nicht angesprochen.

Die EP 0 493 239 A1 beschreibt eine Vorrichtung zur Sortierung von Plastikflaschen. Unterschiedliche Materialien sollen hier auf Grundlage der jeweils spezifischen "cut-off"-Wellenlänge unterschieden werden, also auf Grundlage derjenigen Wellenlänge, oberhalb derer der Transmissionskoeffizient ausgehend von einem Wert nahe Null sprunghaft ansteigt. Um für eine bestimmte Plastikflasche diese spezifische "cut-off-Wellenlänge" bestimmen zu können, ist die Vorrichtung mit einer breitbandigen UV-Lichtquelle ausgestattet, sowie mit mehreren Detektoren, die einem gemeinsamen Strahlteiler sowie einem jeweiligen Filter nachgeschaltet sind. Jedes der Filter entspricht einer anderen typischen "cut-off"-Wellenlänge. Durch sukzessive Bewertung der Ausgangsignale der verschiedenen Detektoren wird - ausgehend von der größtmöglichen Wellenlänge - die für die aktuell betrachtete Flasche spezifische "cut-off"-Wellenlänge eingegrenzt und somit identifiziert. Dadurch ist das Material dieser Flasche bestimmt. Ferner sind ein Detektor zu Feststellung, ob sich ein Objekt im Strahlengang befindet, sowie ein Detektor zum Zwecke einer Normierung vorgesehen.

Die Aufgabe der Erfindung besteht darin, einen opto-elektronischen Sensor der eingangs genannten Art derart auszubilden, daß er bei wirtschaftlicher Herstellung dazu in der Lage ist, transparente Gegenstände bei hoher Empfindlichkeit sicher zu erkennen, wobei insbesondere Störsignaleinflüsse eliminiert werden sollen.

Diese Aufgabe wird durch einen opto-elektronischen Sensor mit den Merkmalen des Anspruchs 1 gelöst.

Es wird somit ein Meßsignal einer ersten Wellenlänge und ein Referenzsignal einer zweiten Wellenlänge erzeugt, wobei beide Signale in den Überwachungsbereich gesendet werden. Auf diese Weise wird erreicht, daß das Referenzsignal, welches die zweite Wellenlänge besitzt, im wesentlichen nur die auf Störeinflüsse zurückzuführenden Signaländerungen des Meßsignals, welches die erste Wellenlänge besitzt, wiedergibt, jedoch nicht unbedingt durch die am zu detektierenden Gegenstand stattfindende Absorption beeinflußt wird. Durch eine geeignete Verrechnung von Meßsignal und Referenzsignal können folglich die Störeinflüsse aus dem erhaltenen Meßsignal eliminiert werden.

Mit der Erfindung wird also auf vorteilhafte Weise erreicht, daß transparente Objekte weitgehend fehlerfrei und sicher detektiert werden können. Da erfindungsgemäß auch auf Verschmutzung zurückgehende Störeffekte eliminierbar sind, lassen sich insbesondere auch die erforderlichen Wartungszyklen verlängern.

Die Verrechnung von Meßsignal und Referenzsignal kann erfindungsgemäß mit geringem Aufwand erfolgen, da bei jeder Messung sowohl das Meßsignal als auch das Referenzsignal ermittelt werden, die dann direkt miteinander verglichen werden können. Die Ausführung dieses direkten Vergleichs kann in vorteilhafter Weise durch eine besonders einfache elektronische Schaltung realisiert werden, wenn das Meßsignal und das Referenzsignal gleichzeitig ausgesendet und empfangen werden. Eine derartige Schaltung kann dann beispielsweise auf das Speichern oder Verzögern eines detektierten Signals sowie auf das Einlesen von bereits gespeicherten Bezugswerten verzichten, und sie kann in diesem Fall beispielsweise aus einem Komparator bestehen.

Eine elektronische Schaltung des erfindungsgemäßen Sensors zum Verrechnen des Meßsignals und des Referenzsignals besitzt weiterhin den Vorteil, daß keine dem Meßsignal oder dem Referenzsignal jeweils separat zugeordnete Schwellenwertschaltung vorgesehen werden muß, um die Empfindlichkeit des Sensors einer bestimmten Anwendung anzupassen oder um alterungsbedingte Veränderungen eines der Kanäle zu kompensieren: Mittels eines direkten Vergleichs der Signale der beiden Kanäle kann der Sensor nämlich grundsätzlich immer mit der höchsten Empfindlichkeit betrieben werden, welche die verwendete Vergleichsschaltung zuläßt. Hierdurch verringern sich Herstellungskosten und Wartungs- bzw. Kalibrierungsaufwand.

Auch durch die erfindungsgemäße Eliminierung der Störeinflüsse läßt sich die Empfindlichkeit des Sensors über lange Zeiträume hinweg stabil halten. Somit kann auch auf vorteilhafte Weise mit Teach-In-Funktionen gearbeitet werden, da einmal eingelernte Werte über lange Zeiträume hinweg Geltung besitzen.

Das erfindungsgemäße Prinzip basiert auf der spektralen Absorption des zu erkennenden Gegenstandes. Die meisten herkömmlichen transparenten Materialien, wie zum Beispiel Glas und PET-Flaschen, Folien, Kunststoffen, Glasscheiben, etc. zeigen eine starke Dämpfung im nahen UV-Bereich und sind somit sicher detektierbar. Der erfindungsgemäße Sensor ist somit zum Detektieren von Flach-, Rund- und Hohlkörpern sowie Folien vielseitig einsetzbar. Verwendungsmöglichkeiten sind insbesondere im Bereich der Getränkeindustrie, der Getränkeverpackungsindustrie sowie der Glas-/Kunststoffherstellung gegeben.

Besonders gut funktioniert ein erfindungsgemäßer Sensor dann, wenn die Wellenlänge des Meßsignals so gewählt wird, daß es eine möglichst starke Absorption an transparenten Objekten erfährt, während die Wellenlänge des Referenzsignals so gewählt ist, daß nur eine möglichst geringe Absorption auftritt. Das Meßsignal ist folglich abhängig von der stattfindenden Absorption sowie von den auftretenden Störungen, wohingegen das Referenzsignal dann allein von den auftretenden Störungen abhängig ist.

Die Wellenlänge des Referenzsignals kann dabei derart gewählt sein, daß der Referenzsender Lichtsignale im sichtbaren Frequenzbereich aussendet.

Bevorzugt ist es, wenn die vom Referenzsender ausgesendeten Lichtsignale zumindest innerhalb des Überwachungsbereichs im wesentlichen den gleichen optischen Weg wie die vom Sender ausgesendeten Lichtsignale zurücklegen. Auf diese Weise wird erreicht, daß sowohl Referenz- als auch Meßsignal den gleichen Störeinflüssen unterliegen. Nach dem die erzeugten Lichtstrahlen den Sensor verlassen haben, sollte also der Strahlengang der Signale beider Wellenlängen die gleiche geometrische Ausrichtung sowie die gleichen Richtungseigenschaften besitzen. Die Sendelichtstrahlen können dabei direkt durch die Lichtquelle bzw. durch die Lichtquellen oder indirekt über eine entsprechende Optik ausgesendet werden.

Wenn man erfindungsgemäß mit zwei Signalen unterschiedlicher Wellenlänge arbeitet, ist sowohl sendeseitig als auch empfangsseitig eine Signaltrennung nötig.

Hierzu sind sendeseitig zwei bzw. mehrere unterschiedlich emittierende Quellen vorgesehen.

Bevorzugt ist es, wenn Sender und Referenzsender zum gleichzeitigen Betrieb, insbesondere zur gleichzeitigen Aussendung der unterschiedliche Wellenlängen aufweisenden Signale ausgelegt sind, da auf diese Weise sichergestellt werden kann, daß sich zeitlich verändernde Störsignale oder eine zeitliche Veränderung der räumlichen Lage oder der Ausgestaltung des zu erkennenden Gegenstands jeweils identische Auswirkungen auf das Meß- und das Referenzsignal haben.

Zum Empfang der vom Referenzsender ausgesandten Lichtsignale kann ein Referenzempfänger vorgesehen werden. Dabei ist es möglich, daß der Empfänger zum Empfang des Meßsignals und der Empfänger zum Empfang des Referenzsignals durch ein und dasselbe Empfangselement gebildet werden. Alternativ können jedoch auch zwei unterschiedliche Empfangselemente vorgesehen werden.

Bevorzugt ist es, wenn ein optischer und/oder elektronischer Teiler zu Trennen der Empfangssignale mit unterschiedlichen Wellenlängen vorgesehen wird, wobei der Teiler z.B. als dichroitischer Teiler ausgebildet werden kann.

Ebenso kann der Teiler als halbdurchlässiger Spiegel ausgebildet werden, der für UV-Licht eine hohe Reflektivität und für das vom Referenzsender abgegebene Licht eine hohe Durchlässigkeit bzw. für UV-Licht eine hohe Durchlässigkeit und für das vom Referenzsender abgegebene Licht eine hohe Reflektivität besitzt.

Der Teiler kann weiterhin als geometrischer/physikalischer Teiler ausgebildet sein, wobei vor dem Empfänger und/oder dem Referenzempfänger Filter, insbesondere Kantenfilter zum Abblocken der jeweils dem anderen Empfänger zugeordneten Empfangssignale angeordnet sind.

Durch die vorstehend beschriebenen Maßnahmen wird also eine empfangsseitige, optische Trennung von zwei Kanälen (Meßsignal und Referenzsignal) erreicht. Ebenso ist jedoch auch eine elektronische Trennung möglich:

Im Rahmen der elektronischen Signaltrennung können die verwendeten Lichtquellen mit den beiden unterschiedlichen Wellenlängen (Meßsignal und Referenzsignal) mit unterschiedlichen Signalfolgen beaufschlagt werden. Empfangsseitig ist es dann möglich, über einen herkömmlichen physikalischen/geometrischen Teiler zwei Empfänger mit dem Empfangslicht zu speisen und über die jeweilige Modulationsfrequenz den entsprechenden Kanal herauszufiltern. Denkbar ist es auch, nur einen einzigen Empfänger zu verwenden und über die unterschiedlichen Pulsfolgen die beiden Kanäle sequentiell auszuwerten.

Im Rahmen einer elektronischen, empfangsseitigen Signaltrennung ist es vorteilhaft, wenn Sender und/oder Referenzsender zum Aussenden von insbesondere periodischen, pulsförmigen Lichtsignalen ausgebildet sind.

Zur Auswertung von Meß- und Referenzsignal ist eine Auswerteeinheit vorgesehen, welche eine Vergleichseinheit zum Vergleich der vom Empfänger und vom Referenzempfänger empfangenen Lichtsignale umfaßt und aus dem Vergleichsergebnis ein Gegenstandsfeststellungssignal erzeugt. Die Vergleichseinheit kann dabei als Dividiereinheit zur Division der Pegel der vom Empfänger und Referenzempfänger empfangenen Lichtsignale ausgebildet sein.

Im folgenden wird ein Beispiel eines möglichen Auswerteverfahrens der durch einen erfindungsgemäßen Sensor erzeugten Signale erläutert, wobei folgende Bezeichnungen gelten:

$\lambda_1$:      Wellenlänge des Meßsenders

$\lambda_2$: Wellenlänge des Referenzsenders

$I_{\lambda1}$: Signalpegel des Meßsignal-Empfängers

$I_{\lambda2}$: Signalpegel des Referenzsignal-Empfängers

$TF_{\lambda1}$: Transmissionsfaktor der Wellenlänge $\lambda_1$

$TF_{\lambda2}$: Transmissionsfaktor der Wellenlänge $\lambda_2$

VF: Verschmutzungsfaktor (wellenlängenunabhängig)

$F_{Li}$: Linsenwirkungsfaktor (wellenlängenunabhängig)

$F_{Re}$: Reflexionsfaktor (wellenlängenunabhängig)

Bei freiem Strahlengang, d.h. wenn sich kein Gegenstand im Überwachungsbereich befindet, wird das Licht der Wellenlänge $\lambda_1$ sowie das Licht der Wellenlänge $\lambda_2$ nicht gedämpft. Das beispielsweise über einen dichroitischen Teiler den beiden Empfängern (Meßsignal-Empfänger und Referenzsignal-Empfänger) zugeführte Licht der Wellenlängen $\lambda_1$ und $\lambda_2$ führt zu entsprechenden Signalpegeln $I_{\lambda1}$ und $I_{\lambda2}$, die geeignet miteinander mathematisch verknüpft werden. Ein Beispiel für eine solche Verknüpfung ist eine Division:

$$\frac{I_{\lambda1}}{I_{\lambda2}} = 1$$

Falls der vorstehend genannte Quotient den Wert 1 aufweist, befindet sich kein Objekt im Strahlengang.

Wenn nun ein Objekt in den Strahlengang eintritt, wird aufgrund der unterschiedlichen Transmissionseigenschaften ($TF_{\lambda1} < TF_{\lambda2}$) des zu detektierenden Gegenstandes in Bezug auf die unterschiedlichen Wellenlängen über das vorstehend beschriebene beispielhafte Quotientenverfahren eine Änderung detektiert, aus der geschlossen werden kann, daß sich ein Gegenstand im Überwachungsbereich bzw. im Strahlengang befindet:

$$\frac{TF_{\lambda1} \cdot I_{\lambda1}}{TF_{\lambda2} \cdot I_{\lambda2}} < 1$$

Eine Verschmutzung, welche auftritt, wenn sich kein Gegenstand im Strahlengang befindet, wirkt sich folgendermaßen aus:

Der entsprechende Verschmutzungsfaktor VF, welcher wellenlängenunabhängig ist, geht sowohl beim Signalpegel $I_{\lambda1}$ als auch beim Signalpegel $I_{\lambda2}$ als gleicher konstanter Faktor in die Rechnung ein. Dieser kürzt sich bei dem beispielhaft beschriebenen Quotientenverfahren wieder heraus:

$$\frac{VF \cdot I_\lambda}{VF \cdot I_{\lambda2}} = \frac{I_{\lambda1}}{I_{\lambda2}} = 1$$

Folglich kann auch bei Auftreten einer Verschmutzung, die dem Verschmutzungsfaktor VF entspricht, mit Sicherheit ausgesagt werden, daß sich kein Objekt im Strahlengang bzw. im Überwachungsbereich befindet.

Manche zu detektierende Gegenstände bewirken auf unerwünschte Weise zusätzlich zu der detektierbaren Signaldämpfung eine Signalerhöhung aufgrund von Linseneffekten, die beispielsweise durch eine gefüllte Flasche hervorgerufen werden können. Bei Systemen, die nur mit einer Wellenlänge arbeiten, kann diese Signalerhöhung in ungünstigen Fällen die erwünschte, durch das Absorptionsverhalten des zu detektierenden Gegenstands bedingte Signaldämpfung kompensieren. Derartige Effekte führen gemäß Stand der Technik oftmals zu einem unerwünschten Mehrfachschalten des Sensors bzw. zu einem Nichterkennen von Gegenständen.

Ein erfindungsgemäßes System, welches mit mindestens zwei Wellenlängen arbeitet, ist jedoch in der Lage, durch ein geeignetes mathematisches Verfahren die genannten Effekte der zusätzlichen Linsenwirkung zu eliminieren. Aufgrund der Tatsache, daß auf beiden Kanälen (Meßsignal und Referenzsignal) und somit bei beiden Wellenlängen $\lambda_1$ und $\lambda_2$ die Linsenwirkung mit dem gleichen Faktor $F_{Li}$ Einfluß nimmt, kommt es wie auch bei der vorstehend erläuterten Verschmutzung zu einer Kompensation der Linsenwirkung:

$$\frac{F_{Li} \cdot TF_{\lambda1} \cdot I_{\lambda1}}{F_{Li} \cdot TF_{\lambda2} \cdot I_{\lambda2}} = \frac{TF_{\lambda1} \cdot I_{\lambda1}}{TF_{\lambda2} \cdot I_{\lambda2}} < 1$$

Da der berechnete Quotient kleiner als 1 ist, läßt sich ein im Strahlengang befindlicher Gegenstand zuverlässig erkennen, auch wenn sich Linsenwirkung und Signaldämpfung zumindest für den Meßstrahl auf die beschriebene Weise kompensieren.

Auch wenn durch einen Oberflächenreflex des sich im Strahlengang befindlichen Gegenstandes auf unerwünschte Weise ein zusätzlicher Signalpegel erzeugt wird, läßt sich dieser erfindungsgemäß kompensieren:

Wie bereits vorstehend bezüglich der Linsenwirkung erläutert, kommt es bei einem Oberflächenreflex zu einer Signalerhöhung, die sich auf beide Kanäle (Meßsignal und Referenzsignal) mit dem gleichen Faktor $F_{Re}$ auswirkt:

$$\frac{F_{Re} \cdot TF_{\lambda1} \cdot I_{\lambda1}}{F_{Re} \cdot TF_{\lambda2} \cdot I_{\lambda2}} = \frac{TF_{\lambda1} \cdot I_{\lambda1}}{TF_{\lambda2} \cdot I_{\lambda2}} < 1$$

Da der berechnete Quotient auch in diesem Fall kleiner als 1 ist, kann zuverlässig auf das Vorhandensein eines Gegenstands geschlossen werden, obwohl sich Signaldämpfung und Oberflächenreflex kompensieren können.

Der Sender und der Referenzsender sind als Halbleiterelement, insbesondere als Diode ausgeführt. Insbesondere bietet sich die Verwendung einer UV-Laserdiode, einer zumindest unter anderem Strahlung im UV-Bereich emittierenden Diode oder eines auf ein Trägerelement gebondeten Dice an.

Sender und/oder Referenzsender können auch als blaues Licht aussendende Diode ausgebildet sein, bei der ein Teil des ausgesandten Lichts im UV-Bereich liegt. Durch die vorstehend genannten Ausbildungen des Senders und/oder Referenzsenders läßt sich eine optimal kleine Bauform des erfindungsgemäßen Sensors realisieren.

Bevorzugt können Sender und/oder Referenzsender ein sichtbares Licht ausstrahlendes Element sowie einen Frequenzverdoppler umfassen, durch den das ausgestrahlte sichtbare Licht in den UV-Bereich transformierbar ist.

Die Wellenlänge der ausgestrahlten UV-Lichtsignale ist bevorzugt kürzer als 380nm, insbesondere kürzer als 350nm, bevorzugt kürzer als 320nm.

Vorteilhaft ist es, wenn ein optisches System vorgesehen wird, durch das die UV-Lichtsignale ausgesandt werden, wobei als optisches System Metalloptiken, Spiegelsysteme, Quarzoptiken, diffraktive optische Elemente (DOE) und/oder Fresnellinsen zum Einsatz kommen können.

Bei Verwendung von Metalloptiken/Spiegelsystemen wird erreicht, daß sowohl die ausgesendete als auch die empfangene Strahlung nicht unnötig durch eine materialabhängige Absörption gedämpft wird. Lediglich die zum Schutz dienenden dünn gehaltenen Abschlußfenster des Sensors dämpfen die Strahlung geringfügig. Der Einsatz von geeignet gewählten optischen Werkstoffen, z.B. Quarz, würde auch einen herkömmlichen optischen Aufbau zulassen.

Ein optischer Aufbau unter Verwendung von DOE bzw. Fresnellinsen, die u.U. sogar direkt in bzw. auf den entsprechenden Abschlußfenstern des Sensors integriert werden können, ist aufgrund der so erzielbaren geringeren Materialstärken und der somit geringeren Dämpfung ebenfalls vorteilhaft. Eine optische Befilterung kann dadurch realisiert werden, daß Kurzpaßfilter direkt auf ein Abschlußfenster des Sensors aufgebracht werden. Ebenso können Extrabauteile zur UV-Befilterung vorgesehen werden.

Hinsichtlich der ausgesandten Lichtstrahlen kann erfindungsgemäß mit unterschiedlichen Strahlgeometrien gearbeitet werden, die insbesondere auch durch unterschiedliche Optikausprägungen an spezielle Kundenapplikationen angepaßt werden können. Beispielsweise ist es möglich, mit runden, eckigen oder strichförmigen Strahlquerschnitten zu arbeiten.

Bevorzugt ist es, wenn ein insbesondere eine gegenüber dem zu detektierenden Objekt geringe Signaldämpfung aufweisendes Reflexionselement zum Reflektieren der ausgesandten Lichtsignale in Richtung zum Empfänger hin vorgesehen ist. Das Reflexionselement weist vorzugsweise gegenüber der Wellenlänge des Referenzsignal im wesentlichen dieselbe Reflektivität auf wie gegenüber der Wellenlänge des Meßsignals. Es kann als einseitig beschichteter und vorzugsweise verspiegelter Reflektor ausgebildet sein, und es kann zum besseren Schutz gegen Verschmutzung geeignet abgedeckt werden. Der Einsatz von Kunststoffreflektoren, von insbesondere aus Quarzglas bestehenden Tripelreflektoren oder von Reflexionsfolien, beispielsweise Kugelscotch, ist möglich. Einseitig beschichtete, insbesondere verspiegelte Kunststoffreflektoren sind besonders kostengünstig und somit vorteilhaft.

Der mechanische Aufbau des erfindungsgemäßen Sensors kann derart gewählt werden, daß Sende- und Empfangszweig optisch so voneinander entkoppelt sind, daß sowohl ein indirektes als auch ein direktes Übersprechen verhindert wird. Sender bzw. Referenzsender einerseits und Empfänger bzw. Referenzempfänger andererseits können optisch, insbesondere durch ein Off-Axis-System, voneinander getrennt werden.

Der erfindungsgemäße Sensor kann nach dem Prinzip der Pupillenteilung oder nach dem Prinzip der Autokollimation aufgebaut sein.

Die Auswerteeinheit kann eine Schwellenwertschaltung umfassen, durch die bei Unterschreiten eines bestimmten Empfangssignalpegels ein Gegenstandsfeststellungssignal erzeugbar ist. Bevorzugt enthält die Auswerteeinheit eine Vergleichseinheit zum Vergleich der von dem Empfänger und dem Referenzempfänger empfangenen Lichtsignale, so daß in Abhängigkeit von dem Vergleichsergebnis ein ein Gegenstandsfeststellungssignal erzeugbar ist.

Weitere bevorzugte Ausführungsformen der Erfindung sind in den Unteransprüchen beschrieben.

Die Erfindung wird nachfolgend anhand der Zeichnungen erläutert; in diesen zeigen:

Fig. 1    das Prinzipschaubild einer Anordnung eines optoelektronischen Sensors bei Verwendung eines Reflexionselements, eines einzigen Sendeelements und zweier unterschiedlicher Empfänger, und

Fig. 2    das Prinzipschaubild einer Anordnung des optoelektronischen Sensors bei Verwendung eines Reflexionselements, zweier unterschiedlicher Sender und eines einzigen Empfangselements.

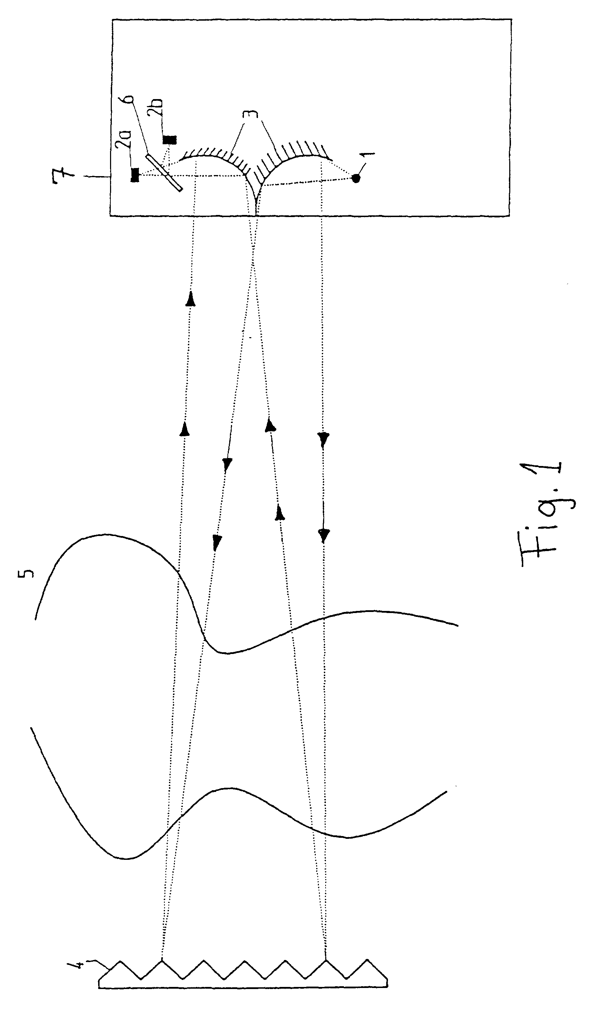

Fig.1 zeigt kein Ausführungsbeispiel der Erfindung.

Fig. 1 zeigt einen opto-elektronischen Sensor 7, der entlang einer gedachten geraden Linie ein Sendeelement 1, einen Strahlteiler 6 und einen Empfänger 2a enthält und neben dieser gedachten Linie, auf der Höhe des Strahlteilers 6, einen zweiten Empfänger 2b besitzt. In einem Abstand vom Sensor 7 befindet sich ein dem Sensor 7 zugewandtes Reflexionselement 4, das in diesem beispiel als ein Tripelreflektor 4 ausgebildet ist. Zwischen dem Tripelreflektor 4 und dem Sensor 7 liegt ein zu detektierender Gegenstand 5.

Zwischen dem Sendeelement 1 und dem Strahlteiler 6 des Sensors 7 sind zwei konkav gewölbte Off-Axis-Spiegel 3 nebeneinander dergestalt angeordnet, daß ihre dem jeweils anderen der beiden Spiegel 3 zugewandten Enden sich berühren und in Richtung des Tripelreflektors 4-zeigen, und daß ihre dem jeweils anderen der beiden Spiegel 3 abgewandten Enden in Richtung des Sendeelements 1 bzw. der zwei Empfänger 2a und 2b zeigen. Die optischen Achsen der Off-Axis-Spiegel 3 laufen somit ausgehend vom Sensor 7 V-förmig auseinander.

Die beiden Off-Axis-Spiegel 3 sind außerdem dergestalt angeordnet, daß eine optische Trennung des Sende- und des Empfangskanals vollzogen ist und somit ein direktes optisches Übersprechen zwischen Sendeelement 1 und den Empfängern 2a und 2b ausgeschlossen ist. Als punktierte und mit Richtungspfeilen versehene Linien sind in Fig. 1 mögliche Lichtstrahlgänge eingezeichnet.

Das Licht des Sendeelements 1 weist zwei unterschiedliche Wellenlängen auf, nämlich die im UV-Bereich liegende Wellenlänge des Meßsignals und die von der Wellenlänge des Meßsignals verschiedene Wellenlänge des Referenzsignals. Das Licht des Sendeelements 1 fällt auf den sendeseitigen Off-Axis-Spiegel 3 und wird von diesem durch ein in Fig. 1 nicht näher bezeichnetes Sendelicht-Austrittsfenster des Sensors 7 in Richtung des Gegenstands 5 bzw. des Tripelreflektors 4 reflektiert.

Das Licht von der Wellenlänge des Meßsignals wird im Gegenstand 5 zumindest teilweise absorbiert, d.h. das Meßsignal wird zunächst abgeschwächt. Das gesamte vom Sendeelement 1 ausgesandte und den Gegenstand 5 durchdringende Licht, also das Licht sowohl des Meßsignals als auch des Referenzsignals, unterliegt im Gegenstand 5 möglichen Störeffekten. Diese Störeffekte können beispielsweise durch Oberflächenreflexion am Gegenstand 5 oder eine Linsenwirkung des Gegenstands 5 gegeben sein, und sie beeinflussen die zwei verschiedenen Wellenlängen des Meßsignals und des Referenzsignals in gleicher Weise.

Das Licht des Sendeelements 1 trifft nach Durchdringen des Gegenstands 5 auf den Tripelreflektor 4, wird von diesem reflektiert und durchdringt erneut den Gegenstand 5. Dabei kann es im wesentlichen den gleichen möglichen Beeinflussungen unterliegen, wie vorstehend beschrieben.

Nach dem erneuten Durchdringen des Gegenstands 5 durchläuft das Licht ein in Fig. 1 nicht näher bezeichnetes Empfangslicht-Eintrittsfenster des Sensors 7 und trifft auf den empfangsseitigen Off-Axis-Spiegel 3. Von diesem wird es auf den Strahlteiler 6 abgelenkt, der das Licht entsprechend der Wellenlänge des Referenzsignals auf den Empfänger 2b umlenkt bzw. den das Licht entsprechend der Wellenlänge des Meßsignals durchdringt, um ohne Ablenkung auf den Empfänger 2a zu treffen. Der Strahlteiler 6 kann beispielsweise als dichroitischer Teiler oder als physikalischer/geometrischer Teiler ausgebildet sein.

Da das Meßsignal und das Referenzsignal von einem einzigen Sendeelement 1 ausgesendet und erst durch den Strahlteiler 6 getrennt werden, durchläuft das Licht dieser beiden Signale zwischen dem Sendeelement 1 und dem Strahlteiler 6 den gleichen optischen Weg. Daher wirken sich auch Verschmutzungen oder Eintrübungen am Sendelicht-Austrittsfenster oder Empfangslicht-Eintrittsfenster des Sensors 7 auf die beiden Signale wiederum in gleichem Maße aus.

Da durch den Strahlteiler 6 empfangsseitig eine optische Trennung von Meßsignal und Referenzsignal erreicht wird und da für diese beiden Signale jeweils ein eigener Empfänger 2b und 2a vorgesehen ist, kann eine in Fig. 1 nicht eingezeichnete Auswerteeinheit die Pegel der beiden Signale durch einfachen direkten Vergleich bezüglich des Vorhandenseins des Gegenstands 5 auswerten.

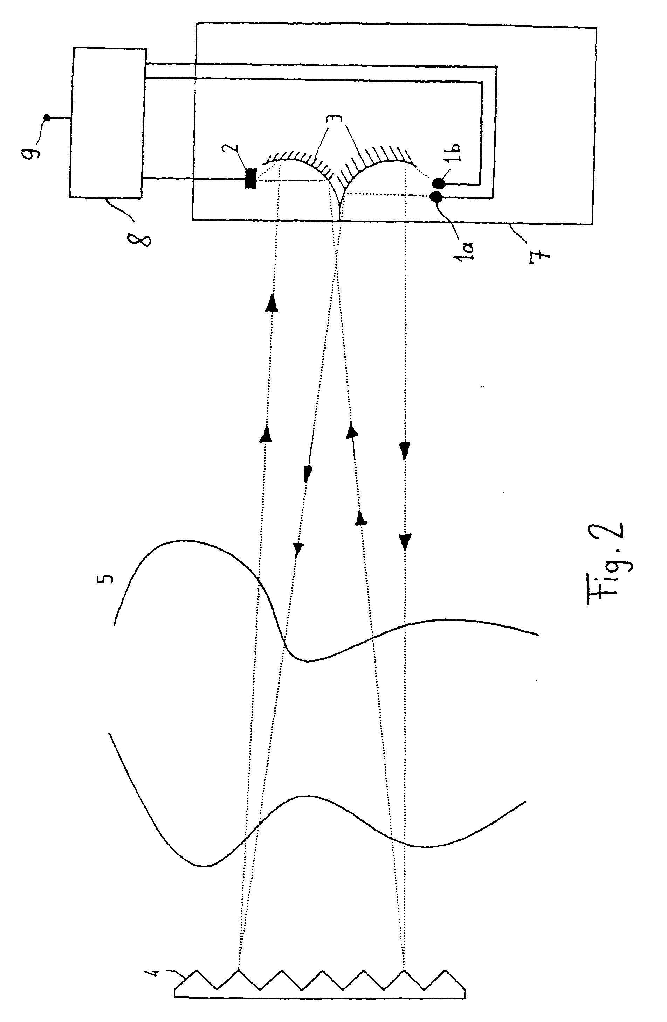

Fig. 2 zeigt einen Sensor 7, einen dem Sensor 7 zugewandten und als Reflexionselement dienenden Tripelreflektor 4 und einen zwischen Sensor 7 und Tripelreflektor 4 liegenden zu detektierenden Gegenstand 5. Der Sensor 7 ist aus zwei räumlich nahe beieinander befindlichen Sendern 1a und 1b, zwei konkav gewölbten Off-Axis-Spiegeln und einem Empfangselement 2 aufgebaut, die in der genannten Reihenfolge im wesentlichen auf einer Linie angeordnet sind, die senkrecht auf der Verbindungslinie vom Sensor 7 zum Tripelreflektor 4 steht. Insbesondere die Anordnung der beiden Off-Axis-Spiegel 3 entspricht dabei der im Zusammenhang mit Fig. 1 bereits beschriebenen Lage und Ausrichtung.

Außerdem ist in Fig. 2 eine Auswerteeinheit 8 dargestellt, von der elektrische Verbindungsleitungen zum Empfangselement 2 und zu den Sendern 1a und 1b verlaufen. Die Auswerteeinheit 8 besitzt einen Ausgang 9.

Vom Sender 1a wird als Meßsignal Licht des UV-Bereichs emittiert. Der Sender 1b sendet ein Referenzsignal einer anderen Wellenlänge als der des Meßsignals aus. Das Licht der beiden Sender 1a und 1b wird von dem sendeseitigen Off-Axis-Spiegel 3 in Richtung des Tripelreflektors 4 gelenkt, von dem es reflektiert wird. Dabei durchdringt es zweimal den Gegenstand 5, nämlich vor und nach der Reflexion am Tripelreflektor 4, so daß in diesem Ausführungsbeispiel die im Zusammenhang mit Fig. 1 bereits beschriebenen Änderungen des Meßsignals und des Referenzsignals erfolgen können.

Nach dem zweiten Durchdringen des Gegenstands 5 gelangt das Licht der beiden Sender 1a und 1b auf den empfangsseitigen Off-Axis-Spiegel 3, der es auf das Empfangselement 2 umlenkt. Aufgrund der räumlichen Nähe der beiden Sender 1a und 1b folgen deren Sendestrahlen entlang des beschriebenen Strahlengangs, insbesondere im Bereich des Gegenstands 5, näherungsweise dem gleichen optischen Weg.

In diesem Ausführungsbeispiel ist erst nach Empfang des Lichts eine elektronische Trennung des Meßsignals und des Referenzsignals vorgesehen. Die beiden Signale werden hierfür sendeseitig mit unterschiedlichen Signalfolgen, beispielsweise unterschiedlicher Frequenz, beaufschlagt, die auch der Auswerteeinheit 8 zugeführt werden. Die Auswerteeinheit 8 kann dann die Pulsfolgen der Signale des Empfangselements 2, beispielsweise durch Vorsehen von geeigneten Filtern, dementsprechend trennen und auswerten. Falls sie durch Vergleich des Meßsignals mit dem Referenzsignal einen Gegenstand 5 im Überwachungsbereich registriert, so erzeugt sie an ihrem Ausgang 9 ein Gegenstandsfeststellungssignal.

Somit kann in diesem Ausführungsbeispiel, das nur ein einziges Empfangselement 2 verwendet, die im wesentlichen nur das Meßsignal betreffende Licht-Absorption im Gegenstand 5 registriert werden, ungeachtet von möglicherweise auftretenden, das Meßsignal und das Referenzsignal betreffenden Störeffekten.

**Patentansprüche**

1. Opto-elektronischer Sensor zur Erkennung transparenter Gegenstände (5), wie beispielsweise Glaskörper, Kunststoffkörper oder Folien, mit zumindest einem Sender (1a) zum Aussenden von Lichtsignalen in einen Überwachungsbereich, mit zumindest einem Empfänger (2, 2a) zum Empfangen der ausgesandten Lichtsignale, sowie mit zumindest einer Auswerteeinheit (8) zur Auswertung der Empfangssignale, wobei

   - der Sender (1a) zur Aussendung von Lichtsignalen im UV-Bereich ausgebildet ist,
   - zumindest ein Referenzsender (1b) zum Aussenden von Lichtsignalen in den Überwachungsbereich vorgesehen ist,
   - die von dem Referenzsender (1b) ausgesandten Lichtsignale in einem anderen Frequenzbereich liegen als die von dem Sender (1a) ausgesandten Lichtsignale, und
   - die Auswerteeinheit (8) eine Vergleichseinheit zum Vergleich der von dem Empfänger (2, 2a) und dem Referenzempfänger (2, 2b) empfangenen Lichtsignale enthält und abhängig von dem Vergleichsergebnis ein Gegenstandsfeststellungssignal erzeugbar ist,

   **dadurch gekennzeichnet, daß**

   - daß der Sender (1a) und der Referenzsender (1b) durch unterschiedliche Sendeelemente gebildet werden, und
   - daß der Sender (1a) und der Referenzsender (1b) als Halbleiterelement ausgebildet sind.

2. Opto-elektronischer Sensor nach Anspruch 1, **dadurch gekennzeichnet,** **daß** die Frequenz der von dem Referenzsender (1b) ausgesandten Lichtsignale so gewählt ist, daß beim Auftreffen auf einen zu erkennenden, transparenten Gegenstand (5) im wesentlichen keine Absorption stattfindet, und/oder **daß** der Referenzsender (1b) zum Aussenden von Lichtsignalen im sichtbaren Frequenzbereich ausgebildet ist.

3. Opto-elektronischer Sensor nach einem der vorhergehenden Ansprüche, **dadurch gekennzeichnet,** **daß** die von dem Referenzsender (1b) ausgesandten Lichtsignale zumindest innerhalb des Überwachungsbereichs im wesentlichen den gleichen optischen Weg wie die von dem Sender (1a) ausgesandten Lichtsignale zurücklegen, wenn sich kein Gegenstand (5) im Überwachungsbereich befindet.

4. Opto-elektronischer Sensor nach einem der vorhergehenden Ansprüche, **dadurch gekennzeichnet,** **daß** Sender (1a) und Referenzsender (1b) zum gleichzeitigen Betrieb, insbesondere zur gleichzeitigen Aussendung der unterschiedliche Wellenlängen aufweisenden Signale ausgelegt sind.

5. Opto-elektronischer Sensor nach einem der vorhergehenden Ansprüche, **dadurch gekennzeichnet,** **daß** zum Empfang der vom Referenzsender (1b) ausgesandten Lichtsignale ein Referenzempfänger (2) vorgesehen ist, wobei insbesondere der Empfänger und der Referenzempfänger durch das gleiche Empfangselement (2) gebildet werden.

6. Opto-elektronischer Sensor nach einem der vorhergehenden Ansprüche, **dadurch gekennzeichnet,** **daß** ein optischer, insbesondere dichroitischer und/oder elektronischer Teiler zum Trennen der Empfangssignale mit unterschiedlichen Wellenlängen vorgesehen ist, wobei der Teiler insbesondere als halbdurchlässiger Spiegel ausgebildet ist, der für UV-Licht eine hohe Reflektivität und für das von dem Referenzsender abgegebene Licht eine hohe Durchlässigkeit bzw. für UV-Licht eine hohe Durchlässigkeit und für das von dem Referenzsender abgegebene Licht eine hohe Reflektivität besitzt, und/oder wobei der Teiler insbesondere als geometrischphysikalischer Teiler ausgebildet ist und vor dem Empfänger (2) und/oder dem Referenzempfänger (2) Filter zum Abblocken der jeweils dem anderen Empfänger (2) zugeordneten Empfangssignale angeordnet sind.

7. Opto-elektronischer Sensor nach einem der vorhergehenden Ansprüche,
**dadurch gekennzeichnet,**
**daß** die Vergleichseinheit eine Dividiereinheit zur Division der Pegel der von dem Empfänger (2) und dem Referenzempfänger (2) empfangenen Lichtsignale umfaßt.

8. Opto-elektronischer Sensor nach einem der vorhergehenden Ansprüche,
**dadurch gekennzeichnet,**
**daß** der Sender (1a) und/oder der Referenzsender (1b) zum Aussenden von insbesondere periodischen pulsförmigen Lichtsignalen ausgebildet ist.

9. Opto-elektronischer Sensor nach einem der vorhergehenden Ansprüche,
**dadurch gekennzeichnet,**
**daß** der Sender (1a) und/oder der Referenzsender (1b) als Diode ausgebildet ist, und/oder
**daß** der Sender (1a) und/oder der Referenzsender (1b) als UV-Laserdiode, als zumindest unter anderem Strahlung im UV-Bereich emittierende Diode oder als auf ein Trägerelement gebondetes Dice ausgebildet ist.

10. Opto-elektronischer Sensor nach einem der vorhergehenden Ansprüche,
**dadurch gekennzeichnet,**
**daß** der Sender (1a) und/oder der Referenzsender (1b) als blaues Licht aussendende Diode ausgebildet ist, bei der ein Teil des ausgesandten Lichts im UV-Bereich liegt, und/oder
**daß** der Sender (1a) und/oder der Referenzsender (1b) ein sichtbares Licht ausstrahlendes Element sowie einen Frequenzverdoppler umfaßt, durch den das ausgestrahlte sichtbare Licht in den UV-Bereich transformierbar ist, und/oder
**daß** die Wellenlänge der ausgestrahlten UV-Lichtsignale kürzer als 380 nm, insbesondere kürzer als 350 nm, bevorzugt kürzer als 320 nm ist.

11. Opto-elektronischer Sensor nach einem der vorhergehenden Ansprüche,
**dadurch gekennzeichnet,**
**daß** ein optisches System (3) vorgesehen ist, durch das die Lichtsignale ausgesandt und/oder empfangen werden,
wobei das optische System (3) insbesondere Metalloptiken, Spiegelsysteme, Quarzoptiken, diffraktive optische Elemente (DOE) und/oder Fresnellinsen umfaßt.

12. Opto-elektronischer Sensor nach einem der vorhergehenden Ansprüche,
**dadurch gekennzeichnet,**
**daß** ein insbesondere eine geringe Signaldämpfung aufweisendes Reflexionselement (4) zum Reflektieren der ausgesandten Lichtsignale in Richtung zum Empfänger (2) hin vorgesehen ist.

13. Opto-elektronischer Sensor nach Anspruch 12,
**dadurch gekennzeichnet,**
**daß** das Reflexionselement (4)

- als insbesondere einseitig beschichteter, vorzugsweise verspiegelter Reflektor, insbesondere Kunststoffreflektor,
- als insbesondere aus Quarzglas bestehender Tripelreflektor oder
- als Reflexionsfolie, beispielsweise Kugelscotch, ausgebildet ist, und/oder

**daß** das Reflexionselement (4) eine gegenüber den verschiedenen Wellenlängen der Signale des Senders (1a) und des Referenzsenders (1b) im wesentlichen unabhängige Reflektivität besitzt.

14. Opto-elektronischer Sensor nach einem der vorhergehenden Ansprüche,
**dadurch gekennzeichnet,**
**daß** der Sender (1a) bzw. der Referenzsender (1b) einerseits und der Empfänger (2) andererseits optisch, insbesondere durch ein Off-Axis-System (3) voneinander getrennt sind, und/oder
**daß** der Sensor nach dem Prinzip der Pupillenteilung bzw. der Autokollimation aufgebaut ist.

15. Opto-elektronischer Sensor nach einem der vorhergehenden Ansprüche,
**dadurch gekennzeichnet,**
**daß** die Auswerteeinheit (8) eine Schwellenwertschaltung enthält, durch die bei Unterschreiten eines bestimmten Empfangssignalpegels ein Gegenstandsfeststellungssignal erzeugbar ist, und/oder
**daß** die Auswerteeinheit (8) eine Schaltung enthält, durch die durch direkten Vergleich zwischen dem Signalpegel des Empfängers (2) und dem Signalpegel des Referenzempfängers (2) ein Gegenstandsfeststellungssignal erzeugbar ist.

## Claims

1. Opto-electronic sensor for recognising transparent articles (5), such as for example glass bodies, plastic bodies, or foils, comprising at least one transmitter (1a) for transmitting light signals into a monitored region, at least one receiver (2, 2a) for receiving the transmitted light signals and also at least one evaluation unit (8) for the evaluation of the received signals, wherein

- the transmitter (1a) is designed for the transmission of light signals in the UV range,
- at least one reference transmitter (1b) is provided for the transmission of light signals into the monitored region,

- the light signals transmitted by the reference transmitter (1b) lie in a different frequency range from the light signals transmitted by the transmitter (1a), and

- the evaluation unit (8) includes a comparison unit for the comparison of the light signals received by the receiver (2, 2a) and by the reference receiver (2, 2b) and an article recognition signal can be produced in dependence on the result of the comparison,

**characterised**

- **in that** the transmitter (1a) and the reference transmitter (1b) are formed by different transmitter elements; and

- **in that** the transmitter (1a) and the reference transmitter (1b) are formed as a semiconductor element

2. Opto-electronic sensor in accordance with claim 1, **characterised**
**in that** the frequency of the light signals transmitted by the reference transmitter (1b) is selected such that on striking a transparent article (5) which is to be recognised essentially no absorption takes place; and/or
**in that** the reference transmitter (1b) is designed for the transmission of light signals in the visible frequency range.

3. Opto-electronic sensor in accordance with any one of the preceding claims,
**characterised in that**
the light signals transmitted by the reference transmitter (1b) pass over substantially the same optical path as the light signals transmitted by the transmitter (1a), at least in the monitored region, when no article (5) is present in the monitored region.

4. Opto-electronic sensor in accordance with any one of the preceding claims,
**characterised in that**

- the transmitter (1a) and the reference transmitter (1b) are designed for simultaneous operation, in particular for the simultaneous transmission of the signals having different wavelengths.

5. Opto-electronic sensor in accordance with any one of the preceding claims,
**characterised in that**
a reference receiver (2) is provided for the reception of the light signals transmitted by the reference transmitter (1b), with in particular the receiver and the reference receiver being formed by the same receiving element (2).

6. Opto-electronic sensor in accordance with any one of the preceding claims,
**characterised in that**
an optical divider, in particular a dichroitic divider and/or an electronic divider is provided for separating the received signals with different wavelengths. with the divider in particular being formed as a semipermeable mirror which has a high reflectivity for UV light and a high permeability for the light transmitted by the reference transmitter, or a high permeability for UV light and a high reflectivity for the light transmitted by the reference transmitter; and/or
with the divider in particular being formed as a geometrical/physical divider and filters being arranged before the receiver (2) and/or before the reference receiver (2) to block out the received signals associated with the other respective receiver (2).

7. Opto-electronic sensor in accordance with any one of the preceding claims,
**characterised in that**
the comparison unit includes a dividing unit for the division of the levels of the light signals received from the receiver (2) and from the reference receiver (2).

8. Opto-electronic sensor in accordance with any one of the preceding claims,
**characterised in that**
the transmitter (1a) and/or the reference transmitter (1b) is formed for the transmission of pulse-like light signals, in particular periodic pulse-like light signals.

9. Opto-electronic sensor in accordance with any one of the preceding claims,
**characterised**
**in that** the transmitter (1a) and/or the reference transmitter (1b) is formed as a diode; and/or
**in that** the transmitter (1a) and/or the reference transmitter (1b) is formed as a UV laser diode, as a diode which at least emits radiation in the UV range amongst others, or as a dice bonded to a carrier element.

10. Opto-electronic sensor in accordance with any one of the preceding claims,
**characterised**
**in that** the transmitter (1a) and/or the reference transmitter (1b) is formed as a diode which transmits blue light wherein some of the transmitted light lies in the UV range; and/or
**in that** the transmitter (1a) and/or the reference transmitter (1b) includes an element which transmits visible light and also a frequency doubler, by which the transmitted visible light can be transformed into the UV range; and/or

**in that** the wavelength of the radiated UV light signals is shorter than 380 nm, in particular shorter than 350 nm, and preferably shorter than 320 nm.

11. Opto-electronic sensor in accordance with any one of the preceding claims,
    **characterised in that**
    an optical system (3) is provided by which the light signals are transmitted and/or received, with the optical system (3) in particular including metal optics, mirror systems, quartz optics, diffractive optical elements (DOE) and/or Fresnel lenses.

12. Opto-electronic sensor in accordance with any one of the preceding claims,
    **characterised in that**
    a reflection element (4), in particular a reflection element having a low signal attenuation, is provided for the reflection of the transmitted light signals in the direction towards the receiver (2).

13. Opto-electronic sensor in accordance with claim 12,
    **characterised**

    - **in that** the reflection element (4) is formed as a reflector, in particular coated on one side and preferably mirror-coated, in particular a plastic reflector,
    - as a triple reflector consisting in particular of quartz glass, or
    - as a reflective foil, for example "Kugelscotch"; and/or

    **in that** the reflection element (4) has a reflectivity which is substantially independent relative to the different wavelengths of the signals of the transmitter (1a) and of the reference transmitter (1b).

14. Opto-electronic sensor in accordance with any one of the preceding claims,
    **characterised in that**
    the transmitter (1a) or the reference transmitter (1b), on the one hand, and the receiver (2), on the other hand, are optically separated from one another, in particular by an off-axis system (3); and/or
    **in that** the sensor is built up in accordance with the principle of pupil division or of autocollimation.

15. Opto-electronic sensor in accordance with any one of the preceding claims,
    **characterised in that**
    the evaluation unit (8) contains a threshold circuit by which an article detection signal can be produced when the received signal falls beneath a specific received signal level; and/or
    **in that** the evaluation unit (8) contains a circuit by which an article detection signal can be produced by direct comparison between the signal level of the receiver (2) and the signal level of the reference receiver (2).

## Revendications

1. Capteur optoélectronique pour la détection d'objets transparents (5) comme par exemple des objets en verre, des objets en matériau synthétique ou des feuilles, avec au moins un émetteur (1a) pour l'émission de signaux lumineux dans une zone de surveillance, avec au moins un récepteur (2, 2a) pour la réception des signaux lumineux émis ainsi qu'avec au moins une unité d'exploitation (8) pour exploiter les signaux reçus,

   - l'émetteur (1a) étant conçu pour émettre des signaux lumineux dans la plage des ultraviolets,
   - au moins un émetteur de référence (1b) étant prévu pour l'émission de signaux lumineux dans la zone de surveillance,
   - les signaux lumineux émis par l'émetteur de référence (1b) se trouvant dans une autre plage de fréquence que les signaux lumineux émis par l'émetteur (1a) et
   - l'unité d'exploitation (8) comprenant une unité de comparaison pour la comparaison des signaux lumineux reçus par le récepteur (2, 2a) et par le récepteur de référence (2, 2b) et un signal de détection de la présence d'un objet pouvant être produit indépendamment du résultat de la comparaison,
   - **caractérisé en ce que** l'émetteur (1a) et l'émetteur de référence (1b) sont formés par des éléments d'émission différents et
   - **en ce que** l'émetteur (1a) et l'émetteur de référence (1b) sont réalisés en tant qu'éléments à semi-conducteurs.

2. Capteur optoélectronique selon la revendication 1, **caractérisé en ce que** la fréquence des signaux lumineux émis par l'émetteur de référence (1b) est choisie de telle façon qu'il n'y a sensiblement pas d'absorption lors de l'impact sur un objet transparent à détecter (5) et/ou **en ce que** l'émetteur de référence (1b) est conçu pour l'émission de signaux lumineux dans la plage des fréquences visibles.

3. Capteur optoélectronique selon l'une des revendications précédentes, **caractérisé en ce que**, si aucun objet (5) ne se trouve dans la zone de surveillance, les signaux lumineux émis par l'émetteur de référence (1b) parcourent, au moins à l'intérieur de la zone de surveillance, sensiblement le même trajet optique que les signaux lumineux émis par l'émetteur (1a).

**4.** Capteur optoélectronique selon l'une des revendications précédentes, **caractérisé en ce que** l'émetteur (1a) et l'émetteur de référence (1b) sont conçus pour un fonctionnement simultané, en particulier pour une émission simultanée des signaux ayant des longueurs d'ondes différentes.

**5.** Capteur optoélectronique selon l'une des revendications précédentes, **caractérisé en ce qu'**un récepteur de référence (2) est prévu pour la réception des signaux lumineux émis par l'émetteur de référence (1b), en particulier le récepteur et le récepteur de référence étant formés par le même élément de réception (2).

**6.** Capteur optoélectronique selon l'une des revendications précédentes, **caractérisé en ce qu'**il est prévu un diviseur optique, en particulier dichroïque et/ou électronique pour la séparation des signaux de réception ayant différentes longueurs d'ondes, le diviseur étant réalise en particulier comme miroir semi-perméable, qui possède une grande réflectivité par rapport à la lumière ultraviolette et une grande perméabilité à la lumière émise par l'émetteur de référence ou une grande perméabilité à la lumière ultraviolette et une grande réflectivité par rapport à la lumière émise par l'émetteur de référence, et/ou le diviseur étant conçu en particulier comme diviseur géométrico-physique et des filtres pour le blocage des signaux de réception attribués respectivement à l'autre récepteur (2) étant disposés devant le récepteur (2) et/ou devant le récepteur de référence (2).

**7.** Capteur optoélectronique selon l'une des revendications précédentes, **caractérisé en ce que** l'unité de comparaison comprend une unité de division pour réaliser une division des niveaux des signaux lumineux reçus par le récepteur (2) et par le récepteur de référence (2).

**8.** Capteur optoélectronique selon l'une des revendications précédentes, **caractérisé en ce que** l'émetteur (1a) et/ou l'émetteur de référence (1b) sont conçus pour l'émission de signaux lumineux en particulier périodiques et en forme d'impulsions.

**9.** Capteur optoélectronique selon l'une des revendications précédentes, **caractérisé en ce que** l'émetteur (1a) et/ou l'émetteur de référence (1b) est réalisé comme diode et/ou **en ce que** l'émetteur (1a) et/ou l'émetteur de référence (1b) est réalisé comme diode laser à ultraviolets, comme diode émettant au moins entre autres un rayonnement dans la plage des ultraviolets ou comme un émetteur DICE formé sur un élément porteur.

**10.** Capteur optoélectronique selon l'une des revendications précédentes, **caractérisé en ce que** l'émetteur (1a) et/ou l'émetteur de référence (1b) sont réalisés comme diode émettant une lumière bleue, avec laquelle une partie de la lumière émise est située dans la plage des ultraviolets, et/ou **en ce que** l'émetteur (1a) et/ou l'émetteur de référence (1b) comprennent un élément émettant une lumière visible ainsi qu'un doubleur de fréquence, à l'aide duquel la lumière visible émise peut être transformée dans la plage des ultraviolets et/ou **en ce que** la longueur d'onde des signaux émis en lumière ultraviolette est inférieure à 380 nm, en particulier inférieur à 350 nm, de préférence inférieure à 320 nm.

**11.** Capteur optoélectronique selon l'une des revendications précédentes, **caractérisé en ce qu'**il est prévu un système optique (3), à l'aide duquel les signaux lumineux sont émis et/ou reçus, le système optique (3) comprenant en particulier des optiques à métal, des systèmes à miroirs, des optiques à quartz, des éléments optiques de diffraction (DOE) et/ou des lentilles de Fresnel.

**12.** Capteur optoélectronique selon l'une des revendications précédentes, **caractérisé en ce qu'**il est prévu un élément de réflexion (4) ayant en particulier un faible amortissement des signaux et servant à la réflexion en direction du récepteur (2) des signaux lumineux émis.

**13.** Capteur optoélectronique selon la revendication 12, **caractérisé en ce que** l'élément de réflexion (4)

- est conçu comme réflecteur en particulier recouvert d'une couche d'un côté et de préférence réflectorisé et en particulier en tant que réflecteur en matériau synthétique,
- comme réflecteur triple se composant en particulier de verre de quartz ou
- comme feuille réfléchissante, par exemple du ruban adhésif à billes et/ou
- **en ce que** l'élément de réflexion (4) comprend une réflectivité sensiblement indépendante par rapport aux différentes longueurs d'ondes des signaux de l'émetteur (1a) et de l'émetteur de référence (1b).

**14.** Capteur optoélectronique selon l'une des revendications précédentes, **caractérisé en ce que** l'émetteur (1a) et/ou l'émetteur de référence (1b) d'une part et le récepteur (2) d'autre part font l'objet d'une séparation optique entre eux, en particulier à l'aide d'un système hors d'axe (3), et/ou **en ce que** le capteur est conçu sur la base de la division pupillaire ou de l'autocollimation.

**15.** Capteur optoélectronique selon l'une des revendications précédentes, **caractérisé en ce que** l'unité

**EP 0 802 430 B1**

d'exploitation (8) comprend un circuit de valeurs de seuil, à l'aide duquel un signal de détection de la présence d'un objet peut être produit si un niveau déterminé du signal de réception n'est pas atteint et/ou **en ce que** l'unité d'exploitation (8) comprend un circuit, à l'aide duquel un signal de détection de la présence d'un objet peut être produit sur la base d'une comparaison directe entre le niveau du signal du récepteur (2) et le niveau du signal du récepteur de référence (2).

Fig. 1

EP 0 802 430 B1

Fig. 2